# EUROPÄISCHE PATENTSCHRIFT

(11) **EP 3 231 298 B1**
(45) Veröffentlichungstag und Bekanntmachung des Hinweises auf die Patenterteilung: **20.05.2020**
(21) Anmeldenummer: 17169096.9
(22) Anmeldetag: 31.03.2010
(51) Int. Cl.: A24C 5/34, A24D 3/02, A24D 3/06, G01N 22/00

(54) **KAPSELPOSITIONSREGELUNG IN FILTERN DER TABAK VERARBEITENDEN INDUSTRIE**
CAPSULE POSITION REGULATION IN FILTERS FOR THE TOBACCO PROCESSING INDUSTRY
RÉGLAGE DE LA POSITION DE CAPSULE DANS DES FILTRES DE L'INDUSTRIE DE TRAITEMENT DU TABAC

(30) Priorität: 21.04.2009 DE 102009017963
(43) Veröffentlichungstag der Anmeldung: 18.10.2017
(62) Teilanmeldung aus: 10158852.3
(73) Patentinhaber: Hauni Maschinenbau GmbH, 21033 Hamburg (DE)
(72) Erfinder: SCHRÖDER, Dierk, 22399 Hamburg (DE)
(74) Vertreter: Seemann & Partner Patentanwälte mbB

(56) Entgegenhaltungen:
- EP-A1- 1 767 107
- WO-A2-2009/099793
- DE-A1- 10 146 953
- US-A- 3 847 064
- US-A- 4 016 830
- US-A1- 2007 012 327
- US-A1- 2007 068 540

## Beschreibung

Die Erfindung betrifft eine Filterstrangmaschine der Tabak verarbeitenden Industrie.

Neue Zigarettenprodukte, die auf den Markt gebracht werden sollen, haben als wesentlichen Bestandteil des Filters eine oder mehrere Kapseln, die mit einer Flüssigkeit, z.B. Menthol, gefüllt ist bzw. sind. Die Kapsel wird unmittelbar, bevor die Zigarette entzündet wird, durch den Raucher durch Druck auf den Filter aufgebrochen, wodurch die Flüssigkeit freigesetzt wird und sich das Aroma der Flüssigkeit entfaltet. Damit dieses gewährleistet ist, ist es notwendig, die Qualität des Zigarettenproduktes zu gewährleisten. Die Kapsel muss, wenn das Zigarettenprodukt verkauft wird, gefüllt sein und einwandfrei im Filter positioniert sein.

Aus der US 2007/0012327 A1 ist bekannt, Kapseln, die mit einem Additiv versehen sind, in einen Filterstrang einzubringen. Hierfür sind Additive zwischen zwei Filterelementen vorgesehen. Das Filtermaterial ist beispielsweise durch ein für die Flüssigkeit der Kapsel impermeables Material wie Zellophan umhüllt. In einem weiteren Verfahrensschritt wird eine Umhüllung durch ein Filtertow vorgenommen, so dass sich eine weitere Hülle bildet. Nach dem Herstellen des Strangs wird der Strang in doppeltlange Filterstäbe abgelängt, und zwar im Wesentlichen in der Mitte zwischen zwei benachbarten Kapseln.

Die EP 1 767 107 A1 offenbart eine Filterstrangherstellungsmaschine. Es wird mittels einer Kamera überprüft, ob die gebildeten doppeltlangen Filter nach dem Schneiden und beim queraxialen Transport richtig gebildet sind.

Es ist Aufgabe der vorliegenden Erfindung, eine hohe Qualität eines Zigarettenproduktes, bei dem in einem Filter wenigstens eine Kapsel, die mit einer Flüssigkeit gefüllt ist, vorhanden ist, zu gewährleisten.

Gelöst wird diese Aufgabe durch den Gegenstand von Anspruch 1.

Gemäß einem beispielhaften Verfahren zum Betrieb einer Filterstrangmaschine der Tabak verarbeitenden Industrie werden in den Filterstrang Kapseln, die mit einer Flüssigkeit gefüllt sind, durch eine Einlegevorrichtung eingebracht , wobei mittels einer Schneidvorrichtung aus dem Filterstrang Filter abgelängt werden, und wobei die Phase zwischen Einlegevorrichtung und Schneidvorrichtung oder wobei die Geschwindigkeit eines Formatbandes relativ zur Phase der Schneidvorrichtung geregelt wird.

Unter Phase zwischen Einlegevorrichtung und Schneidvorrichtung wird der Abstand einer durch eine Einlegevorrichtung eingelegten Kapsel zu dem Schnitt einer Schneidvorrichtung, insbesondere in Relation eines hergestellten Filters verstanden oder eine zeitliche Relation des Zeitpunkts des Einlegens einer Kapsel durch die Einlegevorrichtung und des Zeitpunkts des Schneidens des Filterstrangs durch die Schneidvorrichtung verstanden. Diese Phase ist vorzugsweise ein Vielfaches zu der Anzahl der Filter, die aus dem Filterstrang von der Schneidvorrichtung abgelängt werden und die in die Strecke des Filterstrangs zwischen der Schneidvorrichtung und der Einlegevorrichtung hineinpassen. Unter Phase zwischen Einlegevorrichtung und Schneidvorrichtung wird insbesondere auch eine Differenz des Drehwinkels der Einlegevorrichtung zum Drehwinkel der Schneidvorrichtung verstanden.
Die Geschwindigkeit des Formatbandes kann beispielsweise dann anzupassen sein, wenn bei Verschleiß des Formatbandes ein auf dem Formatband angeordneter Umhüllungsmaterialstreifen einen Schlupf zum Formatband aufweist. In diesem Fall muss die Geschwindigkeit entsprechend geregelt werden, um u.a. mit der Phase der Schneidvorrichtung in Einklang gebracht zu werden, so dass die Schnitte durch den Filterstrang an der richtigen Stelle ausgeführt werden.

Vorzugsweise wird zum Regeln der Phase der Abstand der wenigstens einen Kapsel relativ zum durch die Schneidvorrichtung erzeugten Schnitt in einer Schnittposition bestimmt, wobei der Abstand der Schnittposition relativ zur wenigstens einen Kapsel geregelt wird. Vorzugsweise wird ein Mittelwert des Abstandes der Schnittposition zu der wenigstens einen Kapsel gebildet und auf den Mittelwert die Phase geregelt. Hierdurch kann beispielsweise einem sich langsam einstellenden Schlupf in der Strangmaschine beispielsweise zwischen einem Formatband und dem Filterstrang entgegengewirkt werden.

Insbesondere vorzugsweise wird ein Mikrowellenresonator verwendet, der in DE 198 54 550 B4 beschrieben ist und das dort genannte Resonatorgehäuse aufweist.

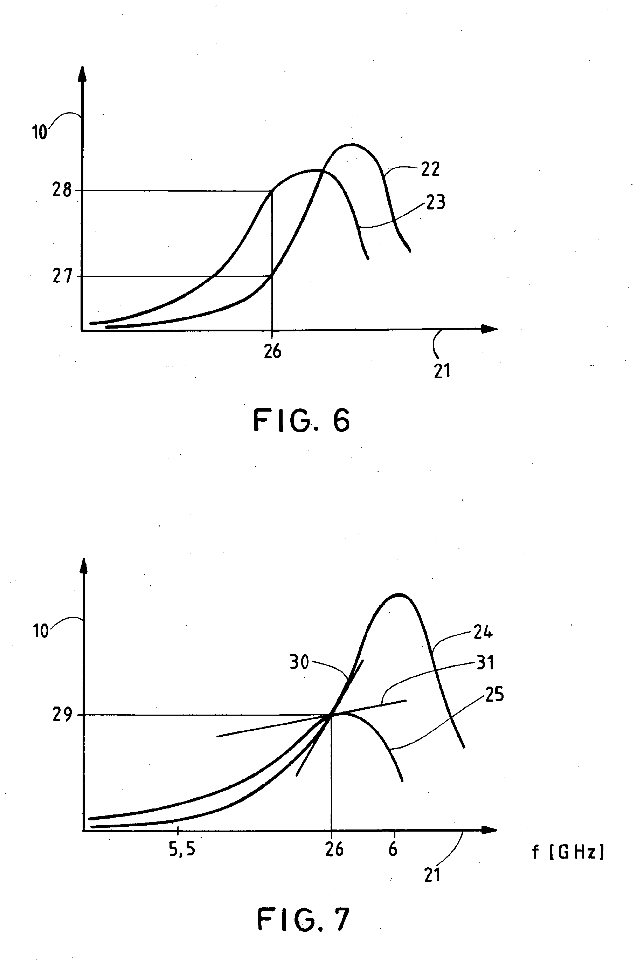

Die Arbeitsfrequenz liegt vorzugsweise zwischen 2 und 30 GHz, insbesondere liegt die Arbeitsfrequenz vorzugsweise in einem Bereich von 2 bis 10 GHz, insbesondere vorzugsweise zwischen 5 und 6,5 GHz. Vorzugsweise liegt die Arbeitsfrequenz im Bereich einer aufsteigenden oder absteigenden Flanke einer Kurve der Messstärke über einer Frequenz. Eine derartige Kurve kann dadurch erhalten werden, dass Mikrowellen mit einer durchstimmbaren Frequenz in den Mikrowellenresonator eingekoppelt werden und die jeweils sich ergebende Messstärke bzw. Signalstärke der ausgekoppelten Mikrowelle, die aus dem Mikrowellenresonator ausgekoppelt wurde, gemessen wird. Hierbei ergibt sich dann eine Kurve wie beispielsweise in Fig. 6 gezeigt. Im Rahmen der Erfindung beinhaltet der Begriff Messstärke bzw. Signalstärke auch den Begriff Amplitude.

Die Arbeitsfrequenz wird dann nicht in das Maximum dieses Frequenzganges gelegt, sondern auf eine Flanke. Hierdurch können Frequenzgangänderungen deutlicher festgestellt werden. Außerdem ist eine derartige Einpunktmessung, also eine Messung bei einer Frequenz durch eine sehr hohe Verarbeitungsgeschwindigkeit gekennzeichnet.

Die Messung geschieht dann so, dass eine Mikrowelle mit einer Frequenz, die der Arbeitsfrequenz entspricht, in den Mikrowellenresonator eingekoppelt wird und das entsprechende Signal der ausgekoppelten Mikrowelle gemessen wird. Vorzugsweise kann alleine die Messstärke bzw. Amplitude oder zusätzlich die Steigung bei der Arbeitsfrequenz gemessen werden, so dass eine genauere Aussage über die Qualität der eingebrachten Kapseln gegeben werden kann. Bei der Steigung handelt es sich beispielsweise um die Steigung des gemessenen Frequenzganges bei der Arbeitsfrequenz bzw. um die zeitliche Änderung des Signals. Vorzugsweise ist somit die Veränderung eine Signaländerung des Mikrowellenfeldes und/oder eine Steigungsänderung eines Signals des Mikrowellenfelds bei der Arbeitsfrequenz.

Vorzugsweise ist die Veränderung zeit- und/oder ortsabhängig. Hiermit ist insbesondere gemeint, dass ein bewegter Filterstrang oder ein bewegter Filter gemessen werden, so dass die Veränderungen des Mikrowellenfelds durch zeitlich sich ändernde Messbedingungen gegeben sind bzw. bezogen auf den Strang oder den Filter in längsaxialer Richtung ortsabhängig sich die Veränderung ergibt.

Vorzugsweise wird eine Bestimmung der Anzahl, der Position und/oder des Zustands der Kapseln vorgenommen.

Vorzugsweise wird durch ein Prüfen des Zustands der Kapseln festgestellt, ob die Kapseln vollständig gefüllt, teilweise gefüllt, leer und/oder ausgelaufen sind und/oder ob es die gewünschten Kapseln sind.

Vorzugsweise wird das Verfahren in einer Filterstrangmaschine der Tabak verarbeitenden Industrie und/oder in einer Filterübertragungsstrecke der Tabak verarbeitenden Industrie durchgeführt. Im Hinblick auf die Durchführung dieses Verfahrens in einer Filterübertragungsstrecke wird auf die am selben Tage wie die vorliegende Patentanmeldung beim Deutschen Patent- und Markenamt angemeldete Patentanmeldung mit dem Titel "Verfahren und Vorrichtung zur Überprüfung der Qualität von mit Kapseln versehenen Filterstäben" verwiesen.

Die Aufgabe wird ferner durch eine Filterstrangmaschine der Tabak verarbeitenden Industrie mit einer Formatvorrichtung zum Formen eines durch die Formatvorrichtung längsaxial geführten Filterstrangs, gelöst, wobei stromaufwärts der Formatvorrichtung eine mit Flüssigkeit gefüllte Kapsel in den Filterstrang einbringende Einlegevorrichtung vorgesehen ist und stromabwärts der Formatvorrichtung eine Schneidvorrichtung, die aus dem Filterstrang Filter ablängt, vorgesehen ist, dadurch gekennzeichnet, dass ein Phasenregler zur Regelung der Phase zwischen der Schneidvorrichtung und der Einlegevorrichtung oder der Phase der Schneidvorrichtung zu der Geschwindigkeit eines Formatband vorgesehen ist, wobei eine Mikrowellenmessvorrichtung vorgesehen ist, mittels derer die Lage der eingebrachten Kapsel relativ zu dem jeweiligen Schnitt bestimmbar ist. Vorzugsweise umfasst die Mikrowellenmessvorrichtung ein von dem Filterstrang durchsetzbares Resonatorgehäuse. Ferner vorzugsweise wird die Mikrowellenmessvorrichtung dazu genutzt, die Qualität der in den Strang eingebrachten Kapseln zu bestimmen. Vorzugsweise ist ferner ein Ausschleussystem für fehlerhafte Filter vorgesehen, das dann die abgelängten Filter einfacher oder mehrfacher Gebrauchslänge ausschleust, während beispielsweise die eingebrachten Kapseln fehlerhaft sind, wie beispielsweise ausgelaufen, leer, nur halbgefüllt oder an einer falschen Position oder eine falsche Anzahl von Kapseln, beispielsweise gar keine Kapsel in einem abgelängten Filter vorhanden ist.

Vorzugsweise ist die Filterstrangmaschine eine Mehrstrangmaschine, insbesondere Zweistrangmaschine. Hierbei wird insbesondere vorzugsweise die Lageregelung der Kapseln zwischen der Einlegevorrichtung und der Schneidvorrichtung durch jeweils eine Mikrowellenmessvorrichtung je Strang durchgeführt. Vorzugsweise kann auch eine Regelung der Lage der Kapseln von zwei Filtersträngen bzw. mehreren Filtersträngen relativ zueinander geschehen, so dass vorzugsweise bei zwei oder mehreren Filtersträngen nur eine Schneidvorrichtung notwendig ist. Alternativ kann hierzu auch vorgesehen sein, je Filterstrang eine Schneidvorrichtung vorzusehen, die dann gesondert in deren Phase geregelt werden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Draufsicht auf eine erfindungsgemäße Filterstrangmaschine mit einer Filtertowaufbereitungseinheit,
- Fig. 2: Messkurven an jeweils zwei Filtern, die aneinander gelegt sind und jeweils eine vierfache Gebrauchslänge aufweisen,
- Fig. 3: Messkurven an jeweils zwei Filtern, die aneinander gelegt sind und jeweils eine vierfache Gebrauchslänge aufweisen,
- Fig. 4: Messkurven an jeweils zwei Filtern, die aneinander gelegt sind und jeweils eine vierfache Gebrauchslänge aufweisen,
- Fig. 5: Messkurven an jeweils zwei Filtern, die aneinander gelegt sind und jeweils eine vierfache Gebrauchslänge aufweisen,
- Fig. 6: ein schematisches Diagramm der Amplitude über die Frequenz für zwei verschiedene Füllungen einer Mikrowellenmessvorrichtung,
- Fig. 7: ein schematisches Diagramm der Amplitude über die Frequenz für zwei verschiedene Füllungen einer Mikrowellenmessvorrichtung,
- Fig. 8: eine schematische Darstellung eines Teils einer erfindungsgemäßen Filterstrangmaschine,
- Fig. 9: eine schematische Darstellung eines Teils einer weiteren erfindungsgemäßen Filterstrangmaschine und
- Fig. 10: eine schematische dreidimensionale Darstellung eines Teils einer weiteren erfindungsgemäßen Filterstrang-maschine.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

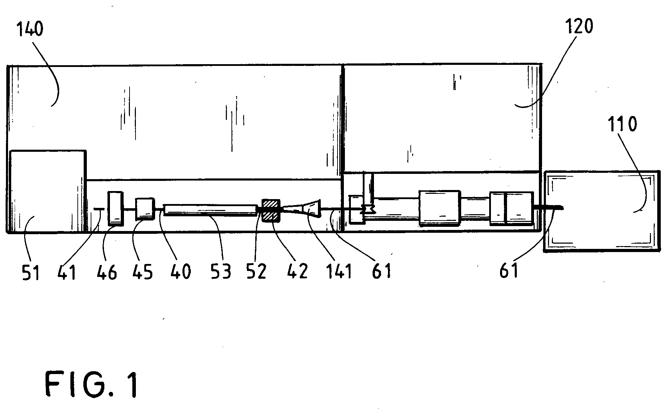

In Fig. 1 ist eine schematische Draufsicht auf eine Filtertowaufbereitungseinheit 120 und eine Filterstrangmaschine 140 dargestellt. Es handelt sich hierbei um eine Anordnung, bei der die Aufbereitungseinheit 120 und die Filterstrangmaschine 140 ungefähr in einer Reihe hintereinander angeordnet sind. In der Aufbereitungseinheit 120 wird der Filtertowstreifen 61 nach dem Abziehen vom Filtertowballen 110 gereckt, ausgebreitet und mit Tröpfchen von Weichmacher, z.B. Triacetin, besprüht, so dass die Oberflächen der Fäden oder Fasern des Materialstreifens angelöst werden, so dass diese verkleben. Der so aufbereitete Materialstreifen 61 wird nachfolgend zu einer Filterstrangmaschine 140 mit einem so genannten Einlauftrichter 141 und einer nachgeordneten Formatvorrichtung 53 bzw. Formatgarnitur gefördert und übergeben.

Zwischen dem Einlauftrichter 141 und der Formatvorrichtung 53 ist schematisch ein Einlegerad 42 angedeutet, das entsprechende Kapseln, die mit Flüssigkeit gefüllt sind, beispielsweise mit Menthol, in den Materialstreifen 61 am Filtertow einbringt. Dieses geschieht in einem Bereich, in dem der Filtermaterialstreifen 61 auf einem Formatband 52 aufliegt. Hinter der Formatvorrichtung 53, die aus dem Filtertowstreifen 61 einen Filterstrang 40 bildet, ist ein Mikrowellenresonator 45 vorgesehen, durch den der Strang hindurchgeführt wird. Im Mikrowellenresonator 45 wird der Filterstrang 40 auf seine Qualität hin überprüft, beispielsweise darauf, ob die richtige Anzahl von Kapseln im Filterstrang vorhanden ist, ob diese an der richtigen Position sind und/oder ob die Kapseln in Ordnung sind, d.h. beispielsweise nicht ausgelaufen und voll befüllt, und/oder ob es sich um die richtigen Kapseln handelt.

Hieran schließt sich eine Schneidvorrichtung 46 an, die aus dem Filterstrang Filter 41 ablängt. Die Filter 41 haben üblicherweise eine mehrfache Gebrauchslänge. Sollte in dem jeweiligen Filter 41 die Qualitätsüberprüfung durch den Mikrowellenresonator 45 ergeben haben, dass dort die Qualität nicht den Vorgaben entspricht, können diese entsprechenden Filter 41 mittels der Ausblasvorrichtung 51 aussortiert werden.

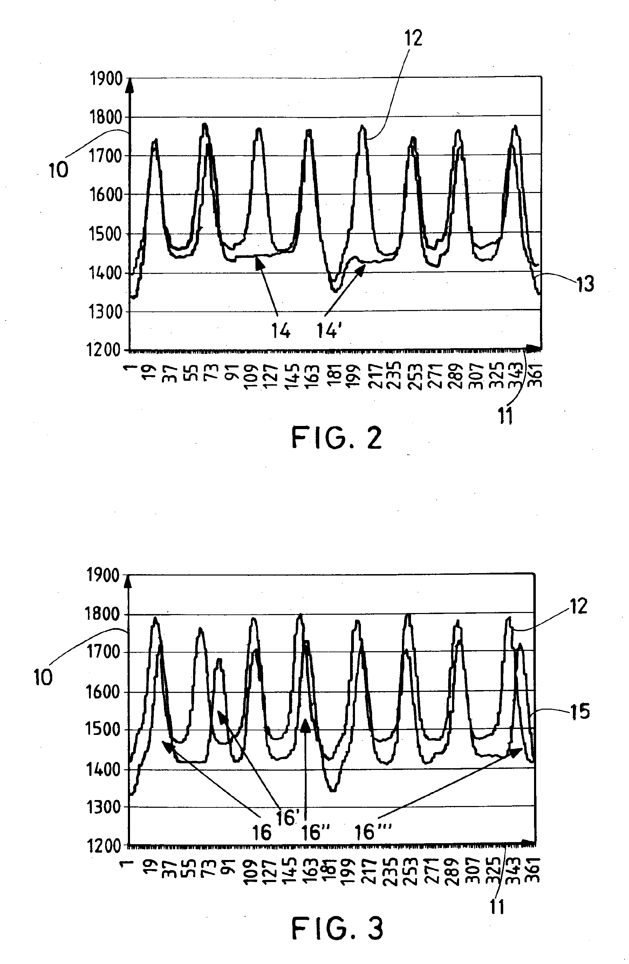

Fig. 2 zeigt ein schematisches Diagramm, bei dem die Messstärke 10 in willkürlichen Einheiten über einen Takt 11 aufgetragen ist. Gemessen wurde zum einen ein Messsignal für eine korrekte Befüllung 12 von zwei aneinander liegenden Filtern vierfacher Gebrauchslänge. Jeder Filter einfacher Gebrauchslänge hat dann eine Kapsel enthalten. Diese ist bei den korrekt befüllten Filtern ungefähr bei Takt 20, bei Takt 65, bei Takt 115, bei Takt 155 usw. angeordnet. Anstelle der angegebenen Takte kann auch eine von der Zeit abhängige Abszisse aufgetragen sein oder eine vom Ort abhängige Abszisse. Im Fall einer zeitabhängigen Abszisse, kann diese beispielsweise in Sekunden oder Millisekunden angegeben sein. Die Lage der jeweiligen Maxima im Messsignal hängt dann von der Geschwindigkeit ab, mit der die zwei aneinander gelegten Filterstäbe durch den Resonator geführt werden. Dies sollte dann natürlich mit konstanter Geschwindigkeit geschehen.

Es ist ferner in Fig. 2 auch ein Messsignal 13 für zwei fehlende Kapseln gezeigt, wobei die Position der fehlenden Kapseln mit 14 und 14' angedeutet sind. Es ist deutlich zu erkennen, dass das Messsignal 12 für korrekte Befüllung sich an dieser Stelle deutlich unterscheidet von dem Messsignal 13 für zwei fehlende Kapseln.

In Fig. 3 ist eine entsprechende schematische Darstelllung gezeigt, wobei auch hier zum Vergleich ein Messsignal 12 für korrekte Befüllung angegeben ist und wobei bei dem weiteren Messsignal 15 bei falsch positionierten Kapseln zu erkennen ist, dass zumindest vier falsch positionierte Kapseln gemessen wurden. Diese sind mit den Bezugsziffern 16 bis 16'" dargestellt.

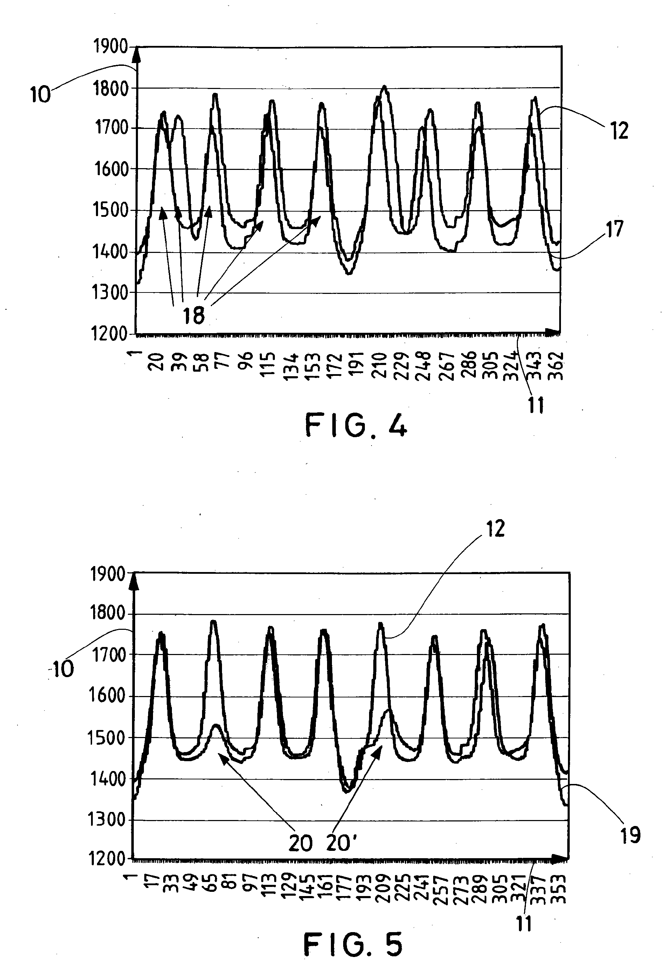

Fig. 4 zeigt auch ein entsprechendes Messdiagramm, bei dem zum einen ein Messsignal 12 für korrekte Befüllung gezeigt ist und ferner ein Messignal 17 für eine falsche Anzahl von Kapseln. Im linken Filter vierfacher Gebrauchslänge sind nämlich fünf Kapseln eingebracht, wobei die Positionen der fünf Kapseln entsprechend mit 18 gekennzeichnet sind. Im rechten Filter vierfacher Gebrauchslänge ist zu erkennen, dass die Position der entsprechenden Kapseln auch nicht bei jeder Kapsel korrekt ist.

In Fig. 5 ist schematisch auch ein entsprechendes Messdiagramm dargestellt, bei dem neben dem Messignal 12 für korrekte Befüllung auch ein Messsignal 19 für ausgelaufene Kapseln dargestellt ist. Bei den Positionen 20 und 20' sind die Kapseln entsprechend ausgelaufen. Dieses ist durch ein deutlich kleineres Messsignal zu erkennen und ferner durch ein verbreitertes Messsignal. Anhand der Breite kann sehr genau festgestellt werden, dass die Kapseln ausgelaufen sind.

In Fig. 6 ist schematisch ein Diagramm der Messstärke in willkürlichen Einheiten 10 über der Frequenz 21 dargestellt. Es sind zwei Frequenzgänge dargestellt, nämlich ein erster Frequenzgang 22 und ein zweiter Frequenzgang 23. Diese Frequenzgänge entstehen bei unterschiedlicher Befüllung von entsprechenden Mikrowellenresonatoren.

Beispielsweise kann der Frequenzgang 22 vorherrschen, wenn ausschließlich Filtertow im Messbereich des Mikrowellenresonators angeordnet ist, und der zweite Frequenzgang 23, wenn eine entsprechende mit einer Flüssigkeit befüllte Kapsel im Messbereich des Mikrowellenresonators angeordnet ist. Es wird dann entsprechend bei der Arbeitsfrequenz 26 die Amplitude bzw. die Messstärke 10 gemessen.

Für den ersten Frequenzgang 22, d.h. die Befüllung des Mikrowellenresonators mit dem Filtertow wird eine Messstärke bzw. ein Signal 27 für den ersten Frequenzgang gemessen und bei der Befüllung mit einer entsprechenden Kapsel eine zweite Messstärke bzw. ein Signal 28 für den zweiten Frequenzgang. Hierbei handelt es sich um den einfachsten und schnellsten Fall der Auswertung gemäß der Erfindung, wobei bei den jeweiligen Messkurven die Amplitude bzw. die Messstärke an sich bei einer festen Frequenz gemessen wird.

In Abhängigkeit der Strangeigenschaft, insbesondere der Befüllung der Kapsel, ändert sich der Betrag der Amplitude. Es wird insofern keine Resonanzkurve erfasst und keine Änderung der Resonanzfrequenz oder eine Änderung der Breite der Resonanzkurve, was zu erhöhtem Messaufwand und sehr aufwändigen Auswertungen führen würde, sondern lediglich die Amplitude, also die Messstärke bei der Arbeitsfrequenz.

Es kann stattdessen auch ein frequenzmoduliertes Signal in den Mikrowellenresonator eingekoppelt werden, so dass neben der Amplitude bzw. der Messstärke 10 eine Amplitudenänderung bzw. eine Steigung der Amplitude bei der Arbeitsfrequenz zur Auswertung zusätzlich oder alternativ verwendet werden kann. Dieses ist in Fig. 7 schematisch dargestellt. Hierdurch kann in kritischen Fällen eine zusätzliche Messauflösung gewonnen werden. So kann es beispielsweise, wie in Fig. 7 dargestellt ist, sein, dass bei verschiedenen Filterbestandteilen sich die Messstärke bei der Arbeitsfrequenz 26 nicht unterscheidet, wie beim dritten Frequenzgang 24 und beim vierten Frequenzgang 25 bei der Arbeitsfrequenz 26 dargestellt ist, wo sich für beide Frequenzgänge ein Signal 29 für den dritten und vierten Frequenzgang ergibt. Hier kann die möglicherweise notwendige Information aus der Steigung 30 für den dritten Frequenzgang und die Steigung 31 für den vierten Frequenzgang bei der Arbeitsfrequenz 26 genutzt werden. Die Arbeitsfrequenz 26 liegt hier bei ungefähr 5,8 GHz. Die maximale Signalstärke bzw. Messstärke 10 des dritten Frequenzgangs 24 liegt bei einer Frequenz von 6 GHz.

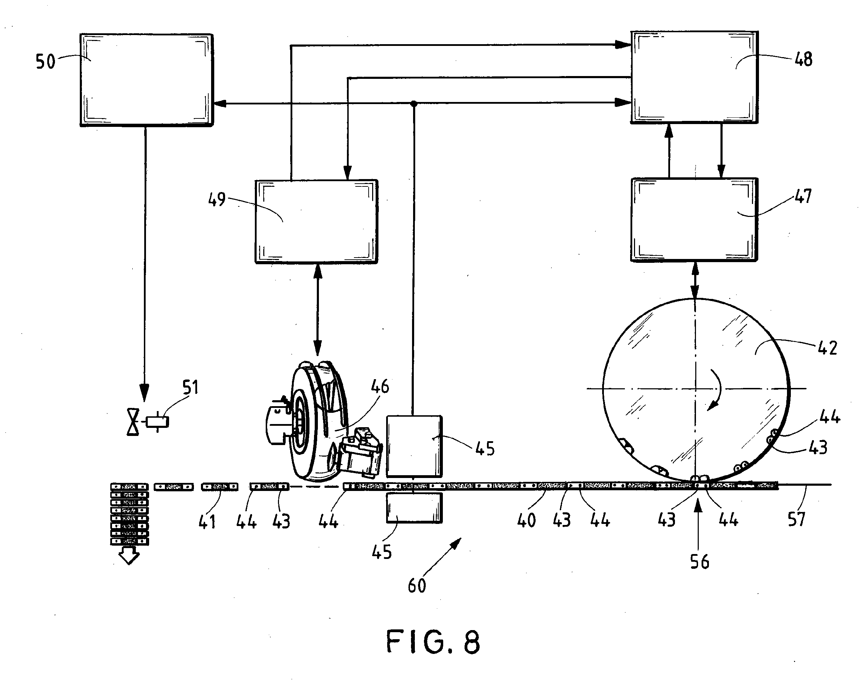

Fig. 8 zeigt schematisch einen Teil einer erfindungsgemäßen Filterstrangmaschine. Ein Filterstrang 40 wird entlang der Längsachse 57, also längsaxial, in Fig. 8 von rechts nach links gefördert. Im Filterstrang 40 werden mittels eines Einlegerads 42 in diesem Ausführungsbeispiel zwei Kapseln 43 und 44 jeweils in im Wesentlichen äquidistanten Abständen zu zwei weiteren Kapseln 43 und 44 in den Filterstrang eingebracht bzw. eingelegt. Der Filterstrang 40 weist dann nebeneinanderliegende Kapseln 43 und 44 auf, zwischen denen auch noch etwas Filtertow angeordnet sein kann.

Der mit den Kapseln 43 und 44 befüllte Filterstrang 40 durchläuft dann einen Mikrowellenresonator 45, in dem unter anderem die Qualität des Filterstrangs und die Befüllung mit Kapseln 43 und 44 überprüft wird. Außerdem dient der Mikrowellenresonator 45 zur Positionsbestimmung der Kapseln 43 und 44. Schließlich schneidet eine Schneidvorrichtung 46, die hier als rotierender Messerträger ausgebildet ist, den Strang 40 in doppeltlange Filter 41. Sollte in dem Mikrowellenresonator 45 festgestellt werden, dass die Qualität der hergestellten Filterstäbe doppelter Gebrauchslänge 41 nicht in Ordnung ist, werden diese durch eine Ausblasvorrichtung 51 ausgeblasen.

Die Steuerung und Regelung der entsprechenden Komponenten der Filterstrangmaschine 60 wird im Folgenden dargestellt:
Die Drehgeschwindigkeit des Einlegerads 42 wird durch ein phasengeregeltes Antriebssystem 47 gesteuert. Dieses gibt ein entsprechendes Steuersignal an das Einlegerad bzw. den Aktuator des Einlegerads 42 ab. Die jeweilige Drehposition des Einlegerads wird als Istposition dem Antriebssystem 47 zurückgeführt, das einen Phasenistwert einer Lageregelung 48 zur Verfügung stellt. Die Lageregelung 48 gibt einen Phasensollwert an das Antriebssystem 47 ab. Dieses ist durch die entsprechenden Striche mit Pfeilen, die die jeweiligen Komponenten in Fig. 8 verbinden, angedeutet.

Ferner gibt der Mikrowellenresonator 45 eine Istposition der in den Strang 40 eingelegten Kapseln 43 und 44 sowohl an die Lageregelung 48 als auch an ein Qualitätsüberwachungs- und Statistiksystem 50 weiter. Bei falscher Lage dient das Qualitätsüberwachungs- und Statistiksystem dazu, ein Auswurfsignal zur Ausblasvorrichtung 51 abzugeben, so dass entsprechende Filter 41 mit falsch positionierten Kapseln 43 bzw. 44 ausgeblasen werden.

Außerdem gibt die Lageregelung 48 einen Phasensollwert an ein phasengeregeltes Antriebssystem 49 für den Messerträger 46 ab. Der Phasenistwert wird vom Antriebssystem 49 an die Lageregelung 48 zurückgeführt. Der Messerträger bzw. der Aktuator des Messerträgers 46 ist mit dem Antriebssystem 47 entsprechend verbunden.

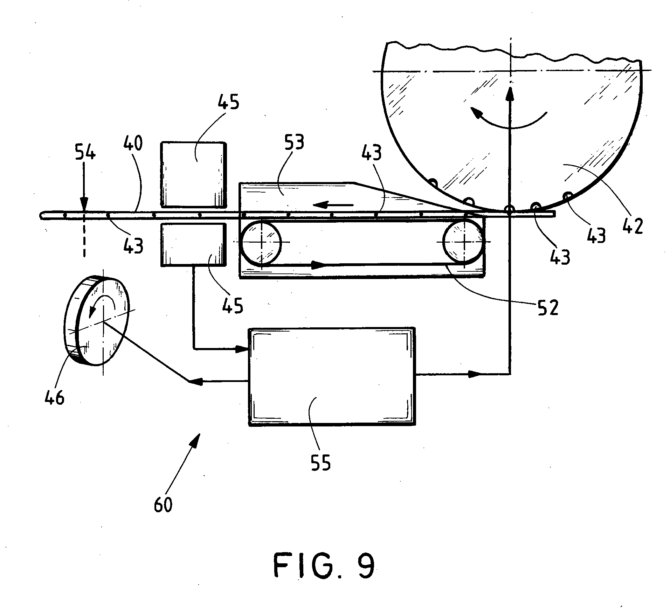

Bei idealer und fehlerfreier Produktion werden das Einlegerad 42 für die Kapseln 43, 44 sowie der Messerträger 46 in ihrer Phasenlage einmal zueinander richtig eingestellt, so dass der Schnitt an der gewünschten Stelle relativ zu den Kapseln erfolgt. Durch Verschleiß eines Formatbandes, das beispielsweise auch in Fig. 9 oder in Fig. 1 dargestellt ist, kann es jedoch im Laufe der Produktion zu einem langsam einsetzten Schlupf zwischen Filterstrang 40 und Formatband 52 kommen. Die Folge hiervon ist ein langsames systematisches Weglaufen der Kapseln relativ zur Schnittlage der Filter 41. Dieses Problem kann mit Hilfe des Messsystems dadurch gelöst werden, dass bei einem systematischen Weglaufen der Kapseln die Phasenlage zwischen Einlegerad 52 und Messerträger 46 durch eine Schnittlageregelung bzw. Lageregelung 48 nachgeregelt wird.

In Fig. 9 ist eine andere schematische Ausführungsform einer erfindungsgemäßen Filterstrangmaschine 60 dargestellt. Es sind entsprechend auch die Komponenten Einlegerad 42, Mikrowellenresonator 45 und die Schneidvorrichtung 46 dargestellt. Das Einlegerad 42 weist Mulden auf, in die in diesem Ausführungsbeispiel nur eine Kapsel 43 jeweils eingebracht ist. Dieses ist im Gegensatz zur Ausführungsform gemäß Fig. 8, in der jeweils Doppelmulden vorgesehen sind, in die die beiden verschiedenen oder gleichen Kapseln nebeneinander eingelegt sind. Die Kapseln werden entsprechend, beispielsweise durch Saugluft, bis zur Übergabe im Strang 41 gehalten.

Anschließend an das Einlegerad 42 ist in Fig. 9 eine Formatvorrichtung 53 dargestellt, die unter anderem ein Formatband 52 aufweist.

Eine Formatvorrichtung ist auch bei der Ausführungsform gemäß Fig. 8 vorhanden, allerdings dort nicht dargestellt.

Die Phasenregelung geschieht in Abhängigkeit eines Positionsmesswertes der jeweils eingelegten Kapsel 43 in den Strang 40, der durch den Mikrowellenresonator 45 generiert wird und einem Phasenregler 55 zugeführt wird. Der Phasenregler 55 steuert bzw. regelt die Phasen des Einlegerads 42 relativ zur Schneidvorrichtung 46, so dass immer die richtige Schnittposition 54 eingehalten werden kann, die in einem vorgegebenen Abstand zur eingebrachten Kapsel 43 liegt.

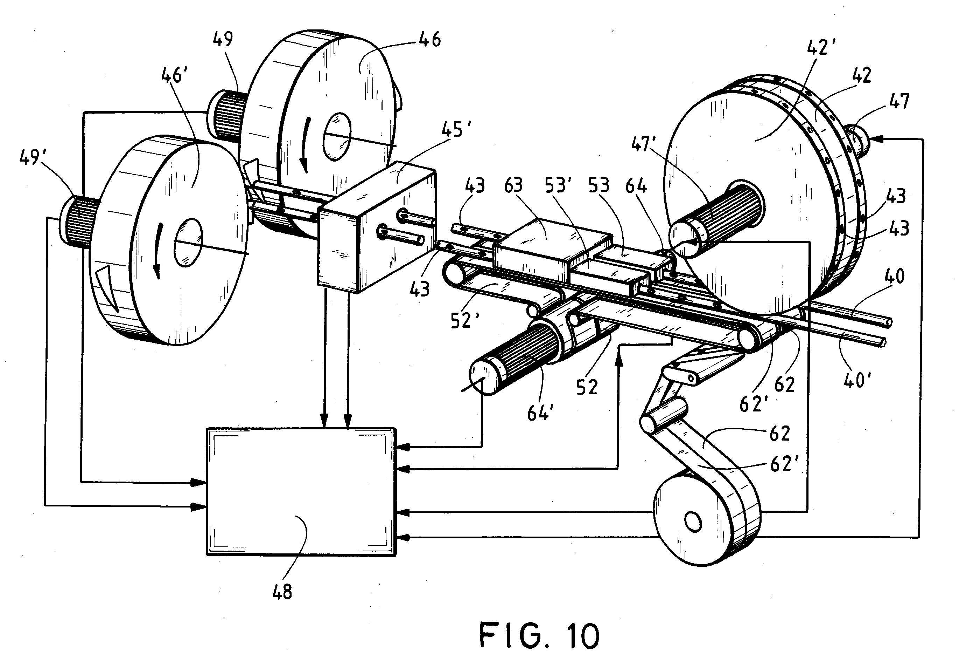

Fig. 10 zeigt schematisch und dreidimensional einen Teil einer erfindungsgemäßen Filterstrangmaschine in einer weiteren Ausführungsform. Es ist eine Zweistrangmaschine dargestellt, also eine Filterstrangmaschine zur Verarbeitung von zwei Filtersträngen 40 und 40'. Entsprechend sind auch zwei Einlegeräder 42, 42' vorgesehen, die durch entsprechende Antriebssysteme 47, 47' jeweils angetrieben werden. Auch in diesem Fall dienen die Einlegeräder 42, 42' dazu, Kapseln 43 in die Filterstränge 40, 40' einzubringen.

Es ist zudem noch eine Bobine dargestellt, von der Umhüllungsmaterial 62, 62' nach einem Schneiden abgezogen wird. Das Umhüllungsmaterial 62, 62' wird zwei Formatbändern 52, 52' zugeführt. Die Formatbänder 52, 52' werden mittels Antriebssystemen 64, 64' angetrieben. Die Filterstränge 40, 40' werden auf die Formatbänder 52, 52' aufgelegt und durch Formatvorrichtungen 53, 53' geführt, in der die Umhüllungsmaterialstreifen 62, 62' um die Filterstränge gewickelt werden und auch geschlossen werden.

Es schließt sich eine Nahtplättvorrichtung 63 an, in der insbesondere durch Wärmeeinwirkung die Umhüllungsmaterialstreifennähte bzw. der Kleber zum Verschließen der Nähte getrocknet werden. Anschließend gelangen die Stränge 40, 40' durch einen Mikrowellenresonator 45', der zwei Durchtrittsöffnungen für jeweils einen Strang 40, 40' aufweist. Der Mikrowellenresonator 45' kann eine Mikrowellenmessvorrichtung sein, die aus zwei Mikrowellenresonatoren besteht, die voneinander entkoppelt sind. Insbesondere durch eine Entkopplung ist eine sehr gute Messgenauigkeit für den jeweiligen Strang möglich. Hierdurch kann dann bei dem jeweiligen Strang ein erfindungsgemäßes Verfahren zum Überwachen der Qualität der Beschickung eines Filters oder eines jeweiligen Filterstrangs der Tabak verarbeitenden Industrie mit Kapseln, die eine flüssige Füllung aufweisen, durchgeführt werden.

Nach dem Mikrowellenresonator 45 bzw. der Mikrowellenresonatorvorrichtung 45 schließen sich zwei Schneidvorrichtungen 46, 46' an, die jeweils durch Antriebssysteme 49 und 49' angetrieben werden.

Die Lageregelung der entsprechenden angetriebenen Komponenten, nämlich der Einlegeräder 42, 42', der Formatbänder 52 und 52' als auch der Schneidvorrichtung 46 und 46', wird über entsprechende mit den Komponenten verbundene Antriebssysteme 47, 47'; 64, 64' und 49, 49' durchgeführt. Die Lageregelung der Formatbänder 52 und 52' umfasst insbesondere eine Geschwindigkeitsregelung.

Die Lageregelung 48 erhält von dem Mikrowellenresonator 45' die Lage der jeweiligen Kapseln 43 in den jeweiligen Strängen. Diese Lage wird weiterverarbeitet zu Steuergrößen, die zur Ansteuerung der Antriebssysteme dienen. Auf diese Weise kann die Phase der Schneidvorrichtungen 46, 46' geregelt oder gesteuert werden. Entsprechend kann auch die Phase der Schneidvorrichtungen 46, 46' relativ zu der Geschwindigkeit oder den Geschwindigkeiten der Formatbänder 52 und 52' gesteuert oder geregelt werden. Schließlich ist es möglich, die Phase der Einlegeräder 42, 42' relativ zur Geschwindigkeit der Formatbänder 52 und 52' zu steuern oder zu regeln.

Soweit im Rahmen dieser Anmeldung von einer Phase die Rede ist, kann anstelle dessen auch eine Geschwindigkeit, insbesondere die Drehgeschwindigkeit, impliziert sein.

Besonders bevorzugt ist es, wenn die Lage der in die Filterstränge 40, 40' eingebrachten Kapseln 43 so gesteuert bzw. geregelt wird, dass die Kapseln in Förderrichtung der Stränge 40, 40' immer auf gleicher Höhe jeweils relativ in den beiden Strängen 40, 40' liegen. In diesem Fall können die Schneidvorrichtungen 46 und 46' zur gleichen Zeit die Stränge schneiden und es findet eine Synchronisation des Laufes der Filterstränge 40, 40' sowie der Weiterverarbeitung der abgelängten Filter statt.

Für den Fall, dass der Schnitt bzw. die Drehgeschwindigkeit der Schneidvorrichtung bzw. Schneidvorrichtungen die Führungsgröße der Regelung ist bzw. konstant ist, können beide Stränge mit einer Schneidvorrichtung geschnitten werden.

### Bezugszeichenliste

- 10: Messstärke [willkürliche Einheiten]
- 11: Takt
- 12: Messsignal für korrekte Befüllung
- 13: Messsignal für zwei fehlende Kapseln
- 14, 14': Position der fehlenden Kapseln
- 15: Messsignal bei falsch positionierten Kapseln
- 16, 16', 16", 16'": falsche Position
- 17: Messsignal für fünf Kapseln
- 18: Positionen der fünf Kapseln
- 19: Messsignal für ausgelaufene Kapseln
- 20, 20': Position einer ausgelaufenen Kapsel
- 21: Frequenz
- 22: erster Frequenzgang
- 23: zweiter Frequenzgang
- 24: dritter Frequenzgang
- 25: vierter Frequenzgang
- 26: Arbeitsfrequenz
- 27: Signal für ersten Frequenzgang
- 28: Signal für zweiten Frequenzgang
- 29: Signal für dritten und vierten Frequenzgang
- 30: Steigung für dritten Frequenzgang
- 31: Steigung für vierten Frequenzgang
- 40, 40': Filterstrang
- 41: abgelängter Filter zweifacher Gebrauchslänge
- 42, 42': Einlegerad
- 43: Kapsel
- 44: Kapsel
- 45, 45': Mikrowellenresonator
- 46, 46': Schneidvorrichtung
- 47, 47': Antriebssystem
- 48: Lageregelung
- 49, 49': Antriebssystem
- 50: Qualitätsüberwachung und Statistiksystem
- 51: Ausblasvorrichtung
- 52, 52': Formatband
- 53, 53': Formatvorrichtung
- 54: Schnittposition
- 55: Phasenregler
- 56: Einlegeposition
- 57: Längsachse
- 60: Filterstrangmaschine
- 61: Filtertowstreifen
- 62, 62': Umhüllungsmaterialstreifen
- 63: Nahtplättvorrichtung
- 64, 64': Antriebssystem
- 110: Filtertowballen
- 120: Aufbereitungseinheit
- 140: Strangeinheit
- 141: Einlauftrichter

## Patentansprüche

1. Filterstrangmaschine (60) der Tabak verarbeitenden Industrie mit einer Formatvorrichtung (52, 53) zum Formen eines durch die Formatvorrichtung (52, 53) längsaxial geführten Filterstrangs (40, 40'), wobei stromaufwärts der Formatvorrichtung (52, 53) eine mit Flüssigkeit gefüllte Kapseln (43, 44) in den Filterstrang (40, 40') einbringende Einlegevorrichtung (42, 42) vorgesehen ist und stromabwärts der Formatvorrichtung (52, 53) eine Schneidvorrichtung (46, 46'), die aus dem Filterstrang (40, 40') Filter (41) ablängt, vorgesehen ist, **dadurch gekennzeichnet, dass** ein Phasenregler (48, 55) zur Regelung der Phase zwischen der Schneidvorrichtung (46, 46') und der Einlegevorrichtung (42, 42') oder der Phase der Schneidvorrichtung (46, 46') zu der Geschwindigkeit eines Formatbandes (52, 52') vorgesehen ist, wobei eine Mikrowellenmessvorrichtung (45, 45') vorgesehen ist, mittels derer die Lage der eingebrachten Kapsel (43, 44) relativ zu dem jeweiligen Schnitt (54) bestimmbar ist.

2. Filterstrangmaschine (60) nach Anspruch 1, **dadurch gekennzeichnet, dass** die Mikrowellenmessvorrichtung (45, 45') ein von dem Filterstrang (40, 40') durchsetzbares Resonatorgehäuse umfasst.

3. Filterstrangmaschine (60) nach Anspruch 1, **dadurch gekennzeichnet, dass** die Mikrowellenmessvorrichtung (45, 45') dazu genutzt wird, die Qualität der in den Strang (40) eingebrachten Kapseln (43, 44) zu bestimmen.

4. Filterstrangmaschine (60) nach einem der Ansprüche 1 bis 3, **dadurch gekennzeichnet, dass** ein Ausschleussystem (51) für fehlerhafte Filter (41) vorgesehen ist.

5. Filterstrangmaschine (60) nach einem der Ansprüche 1 bis 4, **dadurch gekennzeichnet, dass** die Filterstrangmaschine eine Mehrfachstrangmaschine, insbesondere Zweistrangmaschine, ist.

## Claims

1. A filter rod machine (60) of the tobacco processing industry having a formatting apparatus (52, 53) for forming a filter rod (40, 40') guided in a longitudinal-axial manner through the formatting apparatus (52, 53), wherein an insertion apparatus (42, 42) introducing capsules (43, 44) filled with fluid into the filter rod (40, 40') is provided upstream of the formatting apparatus (52, 53) and a cutting apparatus (46, 46') which cuts filters (41) to a length from the filter rod (40, 40') is provided downstream of the formatting apparatus (52, 53), **characterized in that** a phase controller (48, 55) is provided for controlling the phase between the cutting apparatus (46, 46') and the insertion apparatus (42, 42') or the phase of the cutting apparatus (46, 46') to the speed of a formatting belt (52, 52'), wherein a microwave measuring apparatus (45, 45') is provided, by means of which the location of the introduced capsules (43, 44) can be determined relative to the respective cut (54).

2. The filter rod machine (60) according to Claim 1, **characterized in that** the microwave measuring apparatus (45, 45') comprises a resonator housing, wherein the filter rod (40, 40') can be put through the resonator housing.

3. The filter rod machine (60) according to Claim 1, **characterized in that** the microwave measuring apparatus (45, 45') is used to determine the quality of the capsules (43, 44) introduced into the rod (40).

4. The filter rod machine (60) according to any one of Claims 1 to 3, **characterized in that** a discharging system (51) for defective filters (41) is provided.

5. The filter rod machine (60) according to any one of Claims 1 to 4, **characterized in that** the filter rod machine is a multiple-rod machine, in particular a twin-rod machine.

## Revendications

1. Machine à confectionner des tubes à bouts filtres (60) de l'industrie de transformation du tabac, comportant un dispositif de garniture (52, 53) destiné à former un tube de filtre (40, 40') guidé selon un axe longitudinal à travers le dispositif de garniture (52, 53), dans lequel un dispositif d'insertion (42, 42) introduisant des capsules (43, 44) remplies de liquide dans le tube de filtre (40, 40') est prévu en amont du dispositif de garniture (52, 53), et un dispositif de coupe (46, 46') qui coupe des filtres (41) à une certaine longueur à partir du tube de filtre (40, 40') est prévu en aval du dispositif de garniture (52, 53), **caractérisée en ce qu'**est prévu un régulateur de phase (48, 55), destiné à la régulation de la phase entre le dispositif de coupe (46, 46') et le dispositif d'insertion (42, 42') ou de la phase du dispositif de coupe (46, 46') par rapport à la vitesse d'un ruban de garniture (52, 52'), dans lequel est prévu un dispositif de mesure à micro-ondes (45, 45'), au moyen duquel peut être déterminée la position de la capsule (43, 44) introduite par rapport à la coupe (54) respective.

2. Machine à confectionner des tubes à bouts filtres (60) selon la revendication 1, **caractérisée en ce que** le dispositif de mesure à micro-ondes (45, 45') comprend un boîtier de résonateur pouvant être traversé par le tube de filtre (40, 40').

3. Machine à confectionner des tubes à bouts filtres (60) selon la revendication 1, **caractérisée en ce que** le dispositif de mesure à micro-ondes (45, 45') est utilisé pour déterminer la qualité des capsules (43, 44) introduites dans le tube (40).

4. Machine à confectionner des tubes à bouts filtres (60) selon l'une quelconque des revendications 1 à 3, **caractérisée en ce qu'**un système d'éjection (51) des filtres défectueux (41) est prévu.

5. Machine à confectionner des tubes à bouts filtres (60) selon l'une quelconque des revendications 1 à 4, **caractérisée en ce que** la machine à confectionner des tubes à bouts filtres est une machine à confectionner des tubes multiples, en particulier une machine à confectionner deux tubes.
